# EUROPÄISCHE PATENTSCHRIFT

(11) **EP 3 659 742 B1**
(45) Veröffentlichungstag und Bekanntmachung des Hinweises auf die Patenterteilung: **21.07.2021**
(21) Anmeldenummer: 19211739.8
(22) Anmeldetag: 27.11.2019
(51) Int. Cl.: B23B 29/12, B23Q 3/12, B26D 7/26, B26F 1/38

(54) **ULTRASCHALLAGGREGAT FÜR EIN CNC-BEARBEITUNGSZENTRUM**
ULTRASOUND UNIT FOR A CNC MACHINING CENTRE
GROUPE ULTRASONS POUR UN CENTRE D'USINAGE À COMMANDE NUMÉRIQUE

(30) Priorität: 28.11.2018 DE 202018106757 U
(43) Veröffentlichungstag der Anmeldung: 03.06.2020
(73) Patentinhaber: Vielstädte, Heinrich Bernhard, 33442 Herzebrock Clarholz (DE)
(72) Erfinder: Vielstädte, Ralf, 33442 Herzebrock-Clarholz (DE)
(74) Vertreter: BSB Patentanwälte Schütte & Engelen Partnerschaft mbB

(56) Entgegenhaltungen:
- EP-A1- 1 307 314
- WO-A1-2008/156116
- DE-A1- 10 312 445
- US-A1- 2018 250 758

## Beschreibung

Die Erfindung betrifft ein Aggregat für ein CNC-Bearbeitungszentrum mit einer Spindel, die mit einem mehr Achssystem die Bearbeitung von Werkstücken ermöglicht, wobei das Aggregat mit einem Werkzeugwechsler für die Spindel in Wirkverbindung steht, wobei das Aggregat zur Bearbeitung des Werkstücks ein Ultraschallschneidglied umfasst, welches an die Spindel des CNC-Bearbeitungszentrums ansetzbar ist. Weiterhin betrifft die vorliegende Anmeldung ein CNC-Bearbeitungszentrum mit einem solchen Aggregat.

### Stand der Technik

Aus dem Stand der Technik ist es bei einem CNC-Bearbeitungszentrum bekannt, dass das zu bearbeitende Werkstück mit unterschiedlichen Werkzeugen wie Bohrern oder Fräsern bearbeitet wird. Die einzelnen Werkzeuge werden hierbei in dem CNC-Bearbeitungszentrum in einem als Werkzeugwechsler ausgebildeten Werkzeughalter vorgehalten, die entsprechend der programmierten Arbeitsvorgänge an dem Werkstück von einer an einem Mehrachssystem angeordneten Spindel aufgenommen werden. In diesem Werkzeugwechsler befinden sich beispielsweise auf einem Rad angeordnet die entsprechenden Bohrer und Fräser die zur Bearbeitung des Werkstücks in dem CNC-Bearbeitungszentrum benötigt werden.

Derartige nach dem Stand der Technik bekannten CNC-Bearbeitungszentren sind vornehmlich auf die drehenden Werkzeuge beschränkt, wobei dies vornehmlich Bohrer und Fräser betrifft.

Aus der DE 103 12 445 A1 ist ein Aggregat mit einem Ultraschallschneidglied bekannt, das an eine Spindel eines CNC-Bearbeitungszentrums ansetzbar ist. Das Aggregat ist L-förmig ausgebildet, wobei eine Achse des Ultraschallschneidglieds gegenüber einer Achse der Spindel versetzt angeordnet ist. Eine Rotation der Spindel ist mittels eines Übersetzungsgetriebes auf ein Lager des Ultraschallschneidglieds übertragbar, wodurch letzteres um seine Achse drehbar ist. Hierdurch ist eine Nachführung des Ultraschallschneidglieds entsprechend einer Schnittlinie möglich.

### Aufgabe

Der Erfindung liegt die Aufgabe zugrunde, ein alternatives Aggregat für ein CNC-Bearbeitungszentrum bereitzustellen, dessen Steuerung gegenüber dem Stand der Technik einfacher ist.

### Lösung

Erfindungsgemäß wird dieses Problem mit den Merkmalen des Anspruchs 1 gelöst, vorteilhafte Ausgestaltungen der Erfindung ergeben sich aus den Unteransprüchen.

Das erfindungsgemäße Aggregat ist dadurch gekennzeichnet, dass es ein im Wesentlichen kegelstumpfartiges Gehäuse aufweist. Das Kegelstupfgehäuse ist hierbei an die Spindel als Bearbeitungswerkzeug ansetzbar. Das kegelstumpfartige Gehäuse ist vorzugsweise rotationssymmetrisch ausgebildet.

Weiterhin besteht eine Grundfläche des kegelstumpfartigen Gehäuses aus einem topfartigen Gehäuse, das mit seinem Boden eine hinreichende Anlagefläche für die Spindel des CNC-Bearbeitungszentrums bereitstellen kann.

Weiterhin sind in dem Boden des topfartigen Gehäuses als Abschirmkranz auf einer Kreisbahn Zapfenelemente als Mitnehmerdorne zur Festlegung des Aggregates an die Werkzeugaufnahme der Spindel angeordnet. Hierdurch ist ein achszentriertes und genaues Andocken des Aggregates vornehmbar. Fährt also die Spindel in das Werkzeuglager eines Werkzeugwechslers oder Magazins und greift zu dem Aggregat mit dem Ultraschallschneidglied, so wird das Aggregat über die Zapfenelemente angedockt. Im angedockten Zustand kann zumindest das kegelstumpfartige Gehäuse, vorzugsweise das ganze Aggregat, um die Spindel verdreht werden ("C-Achse"), sodass verschiedene Winkelschnittebenen einstellbar sind. Hierbei ist das Aggregat achszentriert, das heißt die Achse des Ultraschallschneidglieds und eine Rotationsachse der Spindel fallen zusammen.

Die mit der Erfindung erreichten Vorteile bestehen nun darin, dass infolge des Einsatzes an der Spindel eines Bearbeitungszentrums ein Ultraschallschneidglied als Ultraschallaggregat eingesetzt werden kann und dadurch den Bearbeitungsbereich für Werkstücke im Bearbeitungszentrum erweitert. Somit kann im Bearbeitungszentrum auch die Möglichkeit in Anspruch genommen werden, dass beispielsweise in der Bearbeitung der Werkstücke aus Werkstoffen wie Holz, Kunststoff, Gummi, Carbon, Glasfaser, Isolierung, Schaumstoff oder anderen Materialen Schnitte an den Werkstücken vorgenommen werden können. Aufgrund dieser Ausbildung wird nun erreicht, dass einzelne Baukomponenten wie Sägen, welche oft in einem vorgeschalteten Aggregat vorgenommen werden müssen, nun in der Bearbeitungsstation selbst vorgenommen werden können. Eine achszentrierte Ausführung mittels der Zapfenelemente führt ferner dazu, dass eine Rotation der Werkzeugaufnahme der Spindel als solche zu einer entsprechenden Rotation des Ultraschneidglieds führt, wobei aufgrund der achszentrierten Ausführung das Ultraschallschneidglied nicht auf einer Kreisbahn bewegt wird, sondern sich nur um seine eigene Achse dreht, wodurch die Winkelschnittebenen einstellbar sind. Einen Versatz zwischen der Achse des Ultraschallschneidglieds und der Rotationsachse der Spindel gibt es nicht.

Erfindungsgemäß besteht somit das Aggregat zur Bearbeitung der Werkstücke aus einem Ultraschallschneidglied als Ultraschallaggregat, welches an die Spindel des Bearbeitungszentrums ansetzbar ist. Hierbei wird das Aggregat in dem Werkzeugwechsler vorgehalten, wobei durch Aufnahme des Aggregates die entsprechenden Schnitte vorgenommen werden. Das Ultraschallschneiden hat hierbei insbesondere den Vorteil, dass keine Rückstände an den Messern oder Klingen verbleiben.

In Weiterbildung ist in der Deckfläche im unteren Teil des kegelstumpfartigen Gehäuses das Ultraschallschneidglied eingebunden. Das Ultraschallschneidglied selbst ist in der Deckfläche im unteren Teil des Gehäuses mit einer Quelle für Ultraschallvibrationen befestigt und eingebunden, insbesondere mit einem Ultraschallemitter. Somit ergibt sich für das Aggregat eine Baukomponente in dem Bearbeitungszentrum, die als Messer zielgerichtet einsetzbar ist.

Vorzugsweise weist das topfartige Gehäuse als Abschirmkranz selbst eine umlaufende Wand mit einer Stromversorgungsschiene auf, an der eine Kontaktaufnahme als Stromkupplung für die Stromaufnahme zur Erzeugung der Ultraschallvibrationen vorgesehen ist. Wird also das Aggregat an die Spindel angedockt, so wird gleichzeitig ein elektrischer Kontakt für die Quelle der Ultraschallvibration hergestellt.

Das Ringgehäuse weist im Boden eine Öffnung auf, wobei in der Öffnung in der Zentrumsachse des Kegelstumpfgehäuses ein Wellenstumpf zur kraftschlüssigen Aufnahme durch Kegel und Auflagefläche drehbar gelagert ist. Der Wellenstumpf in kraftschlüssiger Aufnahme durch Kegel und Auflagefläche wirkt hierbei im angesetzten Zustand des Aggregates mit der Spindel zusammen. Aufgrund dieser Ausbildung wird insbesondere erreicht, dass die Spindel, die vornehmlich mit drehenden Werkzeugen zusammenwirkt, auch hier mit einem stillstehenden Ultraschallschneidglied zusammenwirken kann. Der in dem Gehäuse drehbare Wellenstumpf in kraftschlüssiger Aufnahme vollzieht dann - wenn das Aggregat angedockt ist - Leerdrehungen, die auf das im Einsatz befindliche Ultraschallschneidglied keine Einwirkung haben. Hierbei ist der Wellenstumpf in kraftschlüssiger Aufnahme in einem im Ringgehäuse angeordneten Kugellager drehbar gelagert.

### Ausführungsbeispiele

Ein Ausführungsbeispiel der Erfindung ist in den Zeichnungen rein schematisch dargestellt und wird nachfolgend näher beschrieben. Es zeigt
- Fig. 1:: eine perspektivische Darstellung eines erfindungsgemäßen Aggregates mit einem Ultraschallschneidglied,
- Fig. 2:: einen vertikalen Querschnitt durch das Aggregat gemäß Figur 1,
- Fig. 3:: eine perspektivische Darstellung des erfindungsgemäßen Aggregats, das mit einem Stellglied eines CNC-Bearbeitungszentrums verbunden ist, und
- Fig. 4:: einen vertikalen Querschnitt durch das Aggregat gemäß Figur 3.

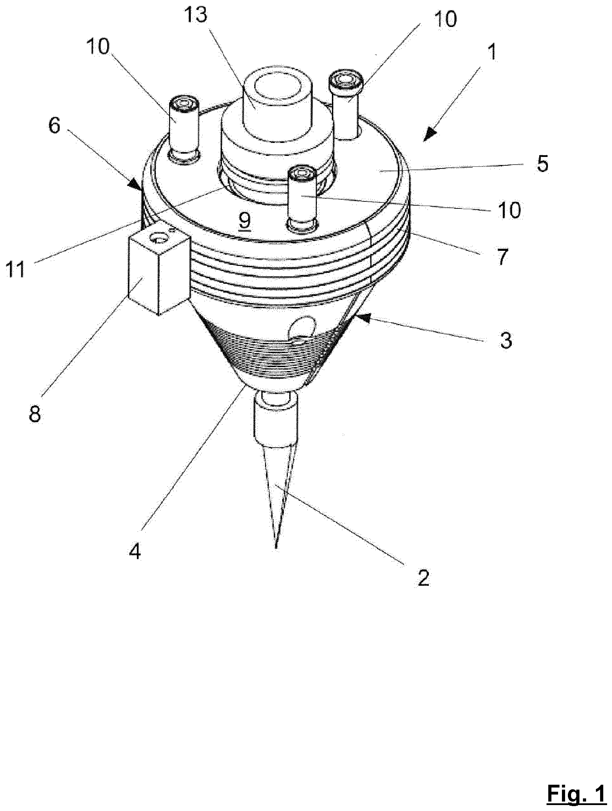

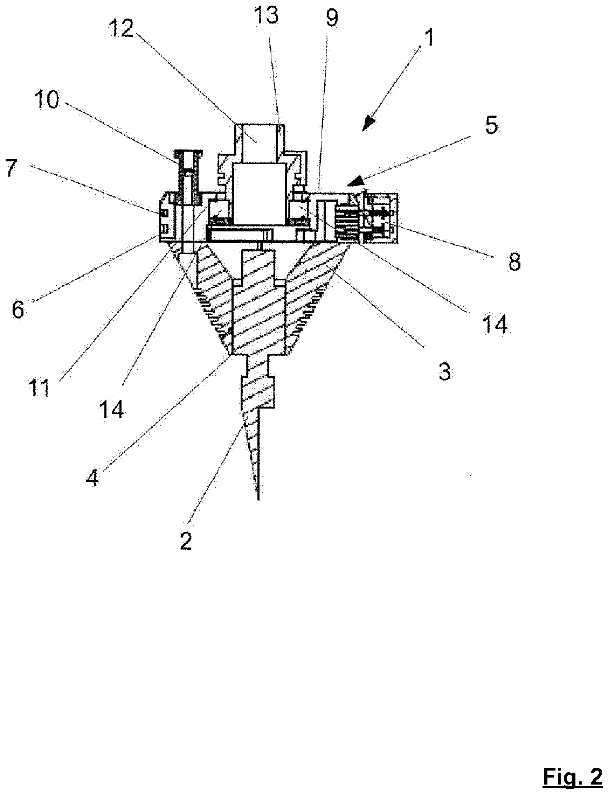

Ein erstes Ausführungsbeispiel, das in den **Figuren 1** **und** **2** gezeigt ist, umfasst ein Aggregat 1 für ein nicht näher dargestelltes CNC-Bearbeitungszentrum mit einer Spindel, die eine Mehrachsen-Bearbeitung zur Fertigung von Werkstücken zulässt. Die Werkstücke als solches bestehen hierbei vorzugsweise aus Werkstoffen wie Holz, Kunststoff, Gummi, Carbon, Glasfaser, Isolierung, Schaumstoff oder dergleichen. Das Aggregat 1 steht mit einem Werkzeugwechsler - ebenfalls nicht näher dargestellt - für die Spindel in Wirkverbindung.

Gemäß der Erfindung umfasst das Aggregat **1** zur Bearbeitung der Werkstücke ein Ultraschallschneidglied **2**, welches an die Spindel des CNC-Bearbeitungszentrums ansetzbar ist. Das Ultraschallschneidglied **2** weist ein im Wesentlichen kegelstumpfartiges Gehäuse **3** auf, wobei in der Deckfläche **4** des kegelstumpfartigen Gehäuses **3** das Ultraschallschneidglied **2** eingebunden ist. Das Ultraschallschneidglied **2** ist in der Deckfläche **4** mit einer Quelle für Ultraschallvibrationen befestigt bzw. eingebunden.

Die Grundfläche **5** des kegelstumpfartigen Gehäuses **3** besteht hier aus einem topfartigen Gehäuse **6** mit einer umlaufenden Wand **7** mit einer Stromversorgungsschiene, an der eine Kontaktaufnahme **8** zur Stromkupplung für die Stromaufnahme zur Erzeugung der Ultraschallvibrationen vorgesehen ist.

Wie insbesondere aus der **Figur 1** zu erkennen ist, sind am Boden **9** des topfartigen Gehäuses **6** auf einer Kreisbahn Zapfenelemente **10** als Mitnahmedorne zur Festlegung des Aggregates **1** an die Werkzeugaufnahme der Spindel angeordnet. Auf diese Weise ist ein achszentriertes Andocken des Aggregats **1** an die Werkzeugaufnahme möglich, wobei eine Rotationsachse der Spindel mit einer Achse des Ultraschallschneidglieds **2** zusammenfällt. Wie weiter aus der **Figur 1** zu erkennen ist, ist in dem Boden **9** des topfartigen Gehäuses **6** als Abschirmkranz eine Öffnung **11** vorhanden. In der Öffnung **11** ist in der Zentrumsachse **12** des kegelstumpfartigen Gehäuses **3** ein Wellenstumpf **13** durch kraftschlüssige Aufnahme durch Kegel und Auflagefläche drehbar gelagert, der im angesetzten Zustand des Aggregates **1** mit der Spindel zusammenwirkt, ohne dass der Schneidprozess des Ultraschallschneidgliedes **2** dadurch beeinträchtigt wird.

In Weiterbildung ist hierbei der Wellenstumpf **13** durch kraftschlüssige Aufnahme in einem im topfartigen Gehäuse **6** angeordneten Kugellager **14** drehbar gelagert. Diese Ausbildung ermöglicht es nun, dass insbesondere das Aggregat **1** hier mit einer Drehspindel eines CNC-Bearbeitungszentrums zusammenwirken kann, weil sich die Spindel hier an dem Wellenstumpf **13** frei laufend drehen kann, ohne dass dadurch die Schnitttätigkeit des Ultraschallschneidglieds **2** beeinträchtigt wird.

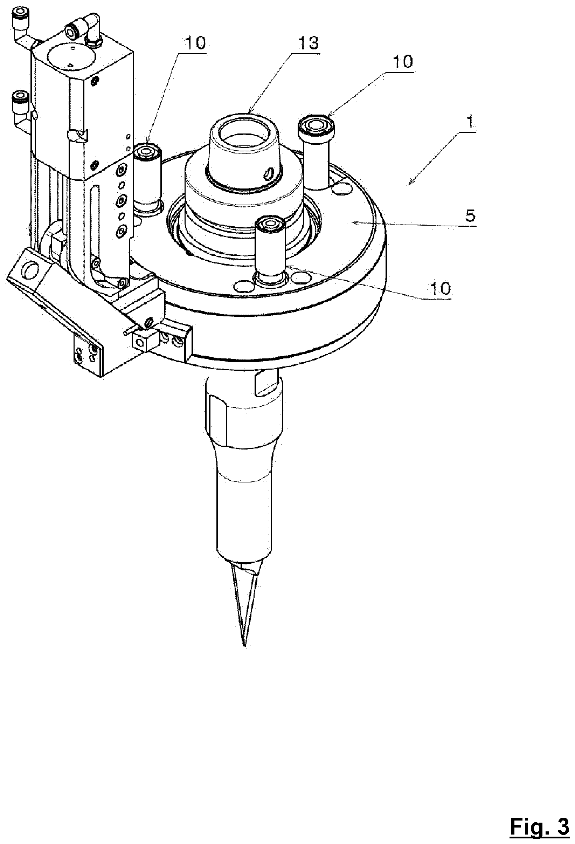

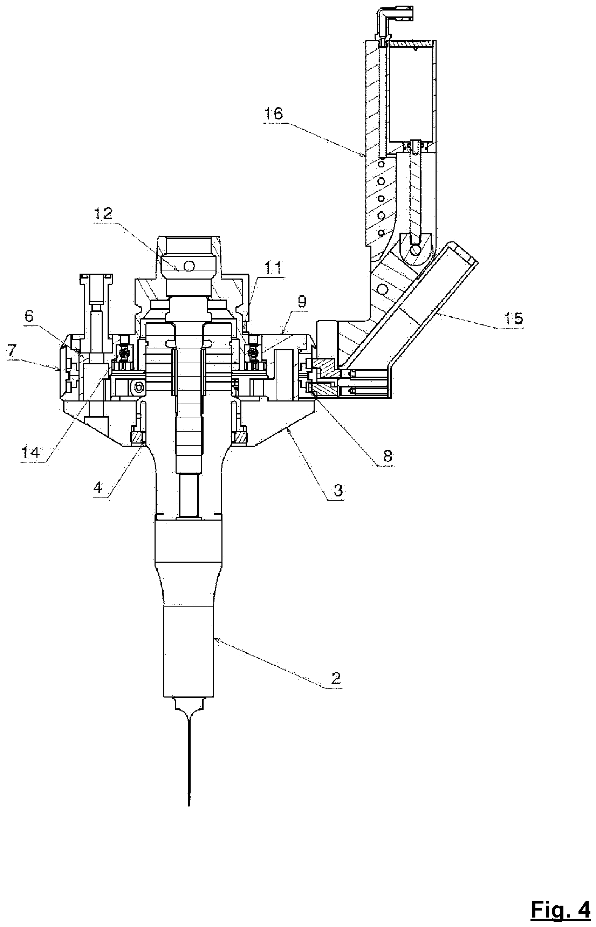

Das Aggregat **1** ist ferner in den **Figuren 3** **und** **4** dargestellt, wobei in diesen Darstellungen das Aggregat **1** mit einer Schnittstelle **16** der C-Achse des nicht dargestellten CNC-Bearbeitungszentrums verbunden ist. Mittels dieser Schnittstelle **16** ist elektrischer Strom an das Aggregat **1** übergebbar, mittels dessen ein Ultraschallemitter des Ultraschallschneidglieds **2** betreibbar ist. Die Andockung des Aggregats **1** erfolgt mittels einer Betätigung einer Stromschnittstelle **15**, die mit der Kontaktaufnahme **8** des Aggregats **1** koppelbar ist. Die Stromschnittstelle **15** ist mittels eines pneumatischen Zylinders der Schnittstelle **16** betätigbar, wobei mittels der Betätigung das Aggregat **1** an seiner Kontaktaufnahme mit der Stromschnittstelle **15** koppelbar ist.

### Bezugszeichenliste

- 1: -Aggregat
- 2: Ultraschallschneidglied
- 3: Gehäuse
- 4: Deckfläche
- 5: Grundfläche
- 6: Topfartiges Gehäuse
- 7: Wand
- 8: Kontaktaufnahme
- 9: Boden
- 10: Zapfenelemente
- 11: Öffnung
- 12: Zentrumsachse
- 13: Wellenstumpf
- 14: Kugellager
- 15: Stromschnittstelle
- 16: Schnittstelle

## Patentansprüche

1. Aggregat (1) für ein CNC-Bearbeitungszentrum mit einer Spindel, die mit einem Mehrachssystem die Bearbeitung von Werkstücken ermöglicht,
wobei das Aggregat (1) mit einem Werkzeugwechsler für die Spindel in Wirkverbindung stehen kann,
wobei das Aggregat (1) zur Bearbeitung des Werkstücks ein Ultraschallschneidglied (2) umfasst, welches an die Spindel des CNC-Bearbeitungszentrums ansetzbar ist,
**dadurch gekennzeichnet, dass**
das Ultraschallschneidglied (2) ein zumindest im Wesentlich kegelstumpfartiges Gehäuse (3) aufweist,
wobei eine Grundfläche (5) des kegelstumpfartigen Gehäuses (3) von einem topfartigen Gehäuse (6) gebildet ist,
wobei an einem Boden (9) des topfartigen Gehäuses (6) auf einer Kreisbahn Zapfenelemente (10) als Mitnehmerdorne zur Festlegung des Aggregates (1) an einer Werkzeugaufnahme der Spindel angeordnet sind.

2. Aggregat (1) nach Anspruch 1, **dadurch gekennzeichnet, dass** in einer Deckfläche (4) des kegelstumpfartigen Gehäuses (3) das Ultraschallschneidglied (2) eingebunden ist.

3. Aggregat (1) nach Anspruch 2, **dadurch gekennzeichnet, dass** das Ultraschallschneidglied (2) in der Deckfläche (4) mit einer Quelle für Ultraschallvibrationen befestigt bzw. eingebunden ist.

4. Aggregat (1) nach einem der vorhergehenden Ansprüche, **dadurch gekennzeichnet, dass** das topfartige Gehäuse (6) eine umlaufende Wand (7) mit einer Stromversorgungsschiene aufweist, an der eine Kontaktaufnahme (8) für die Stromaufnahme zur Erzeugung der Ultraschallvibrationen vorgesehen ist.

5. Aggregat (1) nach einem der vorhergehenden Ansprüche, **dadurch gekennzeichnet, dass** im Boden (9) des topfartigen Gehäuses (6) eine Öffnung (11) vorhanden ist.

6. Aggregat (1) nach Anspruch 5, **dadurch gekennzeichnet, dass** in der Öffnung (11) in der Zentrumsachse (12) des topfartigen Gehäuses (6) ein Wellenstupf (13) drehbar gelagert ist, der in einem angesetzten Zustand des Aggregates (1) dazu geeignet ist, mit der Spindel zusammenzuwirken.

7. Aggregat (1) nach Anspruch 6, **dadurch gekennzeichnet, dass** der Wellenstumpf (13) als kraftschlüssige Aufnahme durch Kegel und Auflagefläche in einem in dem topfartigen Gehäuse (6) angeordneten Kugellager (14) drehbar gelagert ist.

## Claims

1. Unit (1) for a CNC machining centre with a spindle, which allows the machining of workpieces by means of a multiaxis system,
wherein the unit (1) may be in a functional connection with a tool changer for the spindle,
wherein the unit (1) comprises an ultrasound cutting member (2) for machining the workpiece, which can be attached to the spindle of the CNC machining centre,
**characterized in that**
the ultrasound cutting member (2) comprises a housing (3) that is at least substantially frusto-conical,
wherein the base surface (5) of the frusto-conical housing (3) is formed by a pot-like housing (6),
wherein on the base (9) of the pot-like housing (6), pivot elements (10) are disposed in a circular path, as engaging mandrels for fastening the unit (1) on a tool receptacle of the spindle.

2. The unit (1) according to claim 1, **characterized in that** the ultrasound cutting member (2) is integrated in a covering surface (4) of the frusto-conical housing (3).

3. The unit (1) according to claim 2, **characterized in that** the ultrasound cutting member (2) is fastened to, respectively integrated in, the covering surface (4) with a source for ultrasound vibrations.

4. The unit (1) according to any of the preceding claims, **characterized in that** the pot-like housing (6) comprises a circumferential wall (7) with a power supply rail, on which a contact accommodation (8) for the power input is provided for generating the ultrasound vibrations.

5. The unit (1) according to any of the preceding claims, **characterized in that** the base (9) of the pot-like housing (6) includes an aperture (11).

6. The unit (1) according to claim 5, **characterized in that** in the aperture (11) in the central axle (12) of the pot-like housing (6), a stub shaft (13) is rotatably supported which, when the unit (1) is mounted, can interact with the spindle.

7. The unit (1) according to claim 6, **characterized in that** the stub shaft (13) is rotatably supported as a force-fit receptacle, by way of cones and supporting surface, in a ball bearing (14) disposed in the pot-like housing (6).

## Revendications

1. Ensemble (1) pour un centre d'usinage CNC doté d'une broche qui permet l'usinage de pièces à usiner avec un système multi-axes,
ledit ensemble (1) pouvant être en interaction avec un changeur d'outils pour ladite broche,
ledit ensemble (1) comprenant pour l'usinage de la pièce à usiner un élément de coupe à ultrasons (2) qui peut être appliqué à la broche du centre d'usinage CNC,
**caractérisé en ce que** ledit élément de coupe à ultrasons (2) présente un boîtier (3) au moins sensiblement similaire à un tronc de cône,
une surface au sol (5) dudit boîtier similaire à un tronc de cône (3) étant constituée par un boîtier similaire à un pot (6),
des éléments mâles (10) étant agencés, sur un fond (9) dudit boîtier similaire à un pot (6), sur une trajectoire circulaire en tant que mandrins d'entraînement destinés à fixer ledit ensemble (1) sur un logement d'outil de la broche.

2. Ensemble (1) selon la revendication 1, **caractérisé en ce que** l'élément de coupe à ultrasons (2) est intégré dans une couverture (4) dudit boîtier similaire à un tronc de cône (3).

3. Ensemble (1) selon la revendication 2, **caractérisé en ce que** l'élément de coupe à ultrasons (2) est fixé voire intégré, dans la couverture (4), à une source de vibrations ultrasons.

4. Ensemble (1) selon l'une quelconque des revendications précédentes, **caractérisé en ce que** le boîtier similaire à un pot (6) présente une paroi circonférentielle (7) dotée d'un rail d'alimentation électrique sur laquelle une prise de contact (8) est prévue pour la consommation électrique destinée à générer les vibrations ultrasoniques.

5. Ensemble (1) selon l'une quelconque des revendications précédentes, **caractérisé en ce qu'**il y a une ouverture (11) dans le fond (9) du boîtier similaire à un pot (6).

6. Ensemble (1) selon la revendication 5, **caractérisé en ce qu'**un bout d'arbre d'entraînement (13) est, dans l'ouverture (11), disposé mobile en rotation dans l'axe médian (12) du boîtier similaire à un pot (6), lequel bout d'arbre d'entraînement est susceptible de coopérer avec la broche lorsque l'ensemble (1) est appliqué.

7. Ensemble (1) selon la revendication 6, **caractérisé en ce que** le bout d'arbre d'entraînement (13) est, en tant que logement par force par cône et surface d'appui, disposé mobile en rotation dans un palier à roulement (14) agencé dans le boîtier similaire à un pot (6).
